# FASCICULE DE BREVET EUROPEEN

(11) **EP 3 398 294 B1**
(45) Date de publication et mention de la délivrance du brevet: **25.09.2019**
(21) Numéro de dépôt: 16809804.4
(22) Date de dépôt: 12.12.2016
(51) Int. Cl.: H04L 12/24, H04L 12/40

(54) **RESEAU DE COMMUNICATION**
KOMMUNIKATIONSNETZWERK
COMMUNICATIONS NETWORK

(30) Priorité: 28.12.2015 FR 1563376
(43) Date de publication de la demande: 07.11.2018
(73) Titulaire: Safran Electronics & Defense, 92100 Boulogne-Billancourt (FR)
(72) Inventeur: TOILLON, Patrice, 92100 Boulogne Billancourt (FR); GUILLOT, François, 92100 Boulogne-Billancourt (FR)
(74) Mandataire: Decorchemont, Audrey Véronique Christèle
(86) Numéro de dépôt international: PCT/EP2016/080656
(87) Numéro de publication internationale: WO 2017/114651

(56) Documents cités:
- US-A1- 2015 100 774
- LI XINKUN ET AL: "A genetic algorithm based configuration optimization method for AFDX", 2014 10TH INTERNATIONAL CONFERENCE ON RELIABILITY, MAINTAINABILITY AND SAFETY (ICRMS), IEEE, 6 août 2014 (2014-08-06), pages 440-444, XP032776580, DOI: 10.1109/ICRMS.2014.7107235

## Description

L'invention concerne un réseau de communication notamment, bien que non exclusivement, un réseau de communication pour aéronef.

### ARRIERE PLAN TECHNOLOGIQUE DE L'INVENTION

Dans le domaine aéronautique, les réseaux de communication permettent de servir de support aux communications internes à l'avion, ces communications servant principalement à l'échange de données entre les différents éléments de l'avionique ou au sein d'un même élément de l'avionique.

Usuellement, un réseau de communication comporte des modules (calculateurs, processeurs...) mis en communication avec des terminaux d'utilisateurs via des commutateurs pour assurer l'échange de données au sein d'un même module ou entre un module et un terminal d'utilisateur, les commutateurs étant configurés pour surveiller et répartir les différentes trames de données des différents canaux logiques du réseau en s'aidant de tables de configuration contenant les caractéristiques propres à chaque canal logique et à chaque port de sortie associés au commutateur considéré.

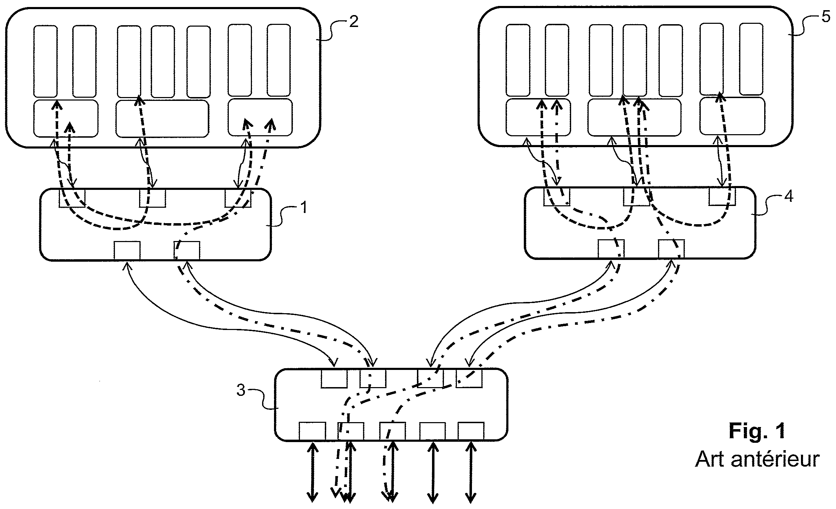

La figure 1 schématise un réseau de communication de l'art antérieur. Dans ce réseau de communication, un premier commutateur 1 contrôle les échanges de données entre les différentes parties d'un même premier module 2 et les échanges de données entre ledit premier module 2 et un deuxième commutateur 3 (schématisées en traits pleins). Le deuxième commutateur 3 contrôle quant à lui les échanges de données (schématisées en traits pleins gras) entre le premier commutateur 1 et les terminaux d'utilisateurs (non représentés ici). De la même façon, un troisième commutateur 4 contrôle les échanges de données entre les différentes parties d'un même deuxième module 5 et les échanges de données entre ledit deuxième module 5 et le deuxième commutateur 3 (schématisées en traits pleins). Le deuxième commutateur 3 contrôle donc également les échanges de données (schématisées en traits pleins gras) entre le troisième commutateur 4 et les terminaux d'utilisateurs.

Chaque module 2, 5 nécessite ainsi la présence d'un commutateur dédié 1, 4 pour sa mise en communication avec un autre commutateur 3 qui peut éventuellement être commun à différents modules. La présence de deux commutateurs en cascade par module est en effet nécessaire pour s'assurer de l'indépendance des données échangées d'une part au sein d'un même module (une partie des données étant schématisée par des tirets à la figure 1) et d'autre part avec l'extérieur du module au niveau des terminaux d'utilisateurs (une partie des données étant schématisée par des tirets-pointillés).

Un tel réseau de communication présente donc une architecture relativement lourde en comportant notamment un nombre de commutateurs élevé.

US2015100774 A1 décrit un équipement avionique reconfigurable abonné à un réseau embarqué tel qu'un réseau AFDX (Avionics Full Duplex Switched Ethernet).

### OBJET DE L'INVENTION

Un but de l'invention est de proposer un réseau de communication qui présente une architecture simplifiée.

### BREVE DESCRIPTION DE L'INVENTION

En vue de la réalisation de ce but, on propose un réseau de communication comportant au moins deux modules et un commutateur commun raccordé d'une part aux deux modules et d'autre part à différents terminaux d'utilisateurs, le commutateur comportant autant de configurations qu'il existe de terminaux d'utilisateurs et de module raccordés au commutateur, à chaque terminal d'utilisateur et à chaque module étant associée une configuration particulière dédiée, chaque configuration associée à un terminal d'utilisateur comportant :
- une première table de configuration qui caractérise les échanges privés entre le premier module et le commutateur et qui est commune à toutes les configurations associées aux terminaux d'utilisateurs et également à la configuration associée au premier module,
- une deuxième table de configuration qui caractérise les échanges privés entre le deuxième module et le commutateur et qui est commune à toutes les configurations associées aux terminaux d'utilisateurs et également à la configuration associée au deuxième module,
- au moins une troisième table de configuration qui caractérise les échanges entre le commutateur et le terminal utilisateur associé à la configuration considérée et qui est propre à ladite configuration,
la configuration associée au premier module comprenant la première table de configuration et la configuration associée au deuxième module comprenant la deuxième table de configuration.

Ainsi, grâce à la structuration particulière du commutateur en différentes configurations associées chacune à l'un des modules ou à l'un des terminaux d'utilisateur et à l'intégration des différentes tables de configuration au sein de chacune desdites configurations, un seul commutateur partagé permet les échanges de données au sein d'un même module, et ce pour chaque module, et entre chacun des modules et les terminaux d'utilisateurs tout en respectant l'indépendance des données échangées. Le commutateur ainsi structuré permet de supporter simultanément plusieurs configurations sans perturbation (ou éventuellement avec des perturbations mais maîtrisées) entre les flux de données.

De façon avantageuse, la structure particulière du commutateur permet à chaque utilisateur de modifier ses propres caractéristiques et paramètres de terminal sans que ceci n'implique une reconfiguration du commutateur dans son intégralité. En effet, il suffit juste de modifier la configuration associée à cet utilisateur ce qui n'entraînera pas de modification des autres configurations.

Selon un mode de réalisation particulier, le commutateur est agencé pour que chaque configuration des terminaux d'utilisateurs soit composée de sous-configurations.

Selon un mode de réalisation particulier, le commutateur est agencé pour que chaque sous-configuration d'une même configuration soit associée à un type de communication normé particulier entre le commutateur et le terminal d'utilisateur associé.

Selon un mode de réalisation particulier, pour au moins une même configuration, au moins une sous-configuration est associée à la communication Ethernet et au moins une autre sous-configuration est associée à la communication A664.

Selon un mode de réalisation particulier, au moins un même port de sortie du commutateur est commun à différents terminaux d'utilisateurs.

Selon un mode de réalisation particulier, le commutateur est agencé de sorte que le port de sortie soit raccordé à autant de ports virtuels internes au commutateur que de terminaux d'utilisateurs reliés audit port de sortie, à chaque port virtuel étant respectivement associé un terminal d'utilisateur, chaque port virtuel étant régi par une loi locale de sortie de trames de données sur ledit port virtuel, le commutateur comportant en outre un organe de contrôle des ports virtuels raccordé d'une part aux différents ports virtuels et d'autre part au port de sortie et gérant les sorties desdits trames de données sur le port de sortie par une loi globale de sortie.

Selon un mode de réalisation particulier, la loi globale de sortie est définie au moins par le budget alloué à chaque port virtuel.

Selon un mode de réalisation particulier, la loi globale de sortie est en outre définie par une latence maximale allouée à chaque port virtuel.

Selon un mode de réalisation particulier, le commutateur est agencé pour être contrôlable selon des modes de fonctionnement particuliers, à chaque mode de fonctionnement particulier étant associé un seul utilisateur, et un mode de fonctionnement administrateur.

### BREVE DESCRIPTION DES DESSINS

La figure 1 a déjà été introduite et illustre schématiquement un réseau de communication pour aéronef de l'art antérieur.

L'invention sera mieux comprise à la lumière de la description qui suit d'un mode de réalisation non limitatif de l'invention en référence aux figures ci-jointes, parmi lesquelles :
- la figure 2 illustre schématiquement un réseau de communication pour aéronef selon un mode de réalisation particulier de l'invention,
- la figure 3 illustre schématiquement une partie du commutateur du réseau de communication schématisé à la figure 2.

### DESCRIPTION DETAILLEE DE L'INVENTION

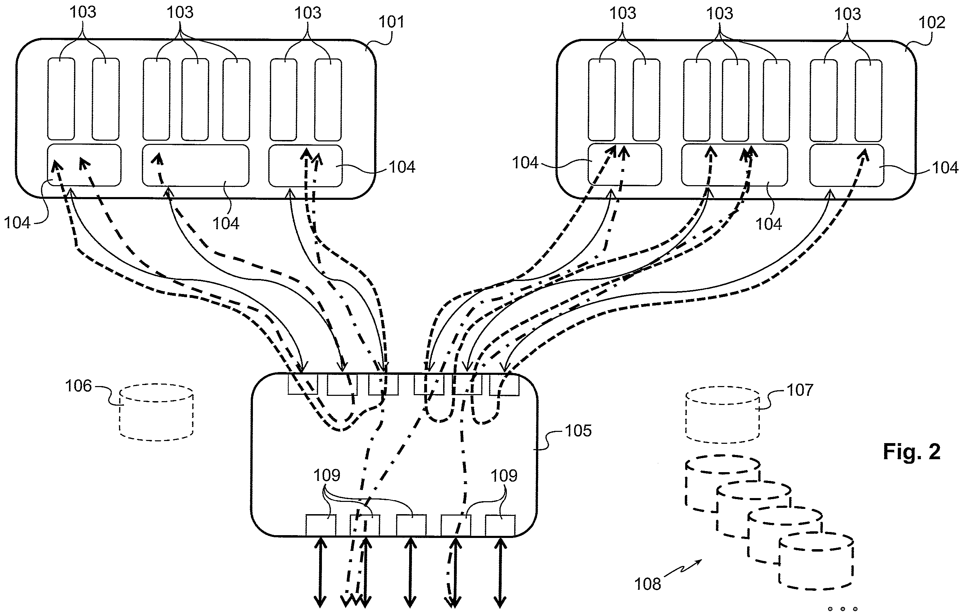

En référence à la figure 2, le réseau de communication selon un mode de réalisation particulier de l'invention est un réseau de communication pour aéronef.

Le réseau de communication comporte ici un premier module 101 et un deuxième module 102 chacun associé à un élément avionique de l'aéronef (non représentés ici). Chaque module 101, 102 est par exemple un calculateur ou encore un processeur ou un ensemble de calculateurs et/ou de processeurs. Chaque module héberge de multiples applications-fonctions 103 avioniques à exécuter, applications-fonctions 103 propres à l'élément avionique associé audit module. Chaque module comporte entre outre des unités de raccordement 104 associées chacune à une ou plusieurs applications-fonctions 103 dudit module. Les unités de raccordement 104 sont ici de type ARINC 664 P7 End System.

Le réseau de communication comporte également un commutateur 105 partagé d'une part entre les différents modules 101, 102 et d'autre part entre différents terminaux d'utilisateur (non représentés ici). Le commutateur 105 est ainsi raccordé d'une part aux unités de raccordement 104 des modules et d'autre part aux terminaux d'utilisateurs. Le raccordement peut tout aussi bien être filaire ou non filaire entre les modules 101, 102, le commutateur 105 et les terminaux d'utilisateurs.

Le commutateur 105 comporte une pluralité de configurations. Le commutateur 105 comporte ainsi autant de configurations qu'il existe de terminaux d'utilisateurs et de modules raccordés au commutateur 105, à chaque terminal d'utilisateur et à chaque module étant associée une configuration particulière dédiée.

La configuration associée au premier module 101 comporte une seule table de configuration 106 caractérisant les échanges entre ledit premier module 101 et le commutateur 105 (schématisées en traits pleins). La configuration associée au deuxième module 102 comporte aussi une seule table de configuration 107 caractérisant les échanges entre ledit deuxième module 102 et le commutateur 105 (schématisées en traits pleins).

Ces échanges sont donc privés. Par « privés », on entend internes au module considéré entre les différentes unités de raccordement dudit module.

Chaque configuration associée à l'un des terminaux d'utilisateurs comporte en revanche plusieurs tables de configuration à savoir :
- la première table de configuration 106 caractérisant les échanges entre le premier module 101 et le commutateur 105 (qui est donc identique à toutes les configurations associées aux terminaux d'utilisateur et à la configuration associée au premier module 101),
- la deuxième table de configuration 107 caractérisant les échanges entre le deuxième module 102 et le commutateur 105 (qui est donc identique à toutes les configurations associées aux terminaux d'utilisateur et à la configuration associée au deuxième module 102),
- au moins une table de configuration supplémentaire 108 qui lui est propre et qui caractérise les échanges entre le commutateur 105 et le terminal d'utilisateur associé à la configuration considérée, ces échanges étant donc pour le coup publics (par « publics », on entend entre différents éléments avioniques distincts de l'aéronef dont au moins un associé à l'un des modules).

La première table de configuration 106 comporte par exemple les caractéristiques et les paramètres des canaux logiques de communication du commutateur 105 ainsi que les caractéristiques et les paramètres permettant la connexion aux unités de raccordement 104 du premier module 101. La deuxième table de configuration 107 comporte par exemple les caractéristiques et les paramètres des canaux logiques de communication du commutateur 105 ainsi que les caractéristiques et les paramètres permettant la connexion aux unités de raccordement 104 du deuxième module 102. La table de configuration supplémentaire 108 propre à chaque configuration comporte par exemple les caractéristiques et les paramètres des canaux logiques du commutateur 105 ainsi que les caractéristiques et les paramètres des ports de sortie du commutateur 105.

Le commutateur 105 est ainsi agencé pour présenter différentes configurations qui sont traitées de façon indépendante les unes des autres. En particulier, le commutateur 105 est ainsi apte à charger de façon indépendante les différentes configurations ce qui permet de pouvoir mettre à jour de façon indépendante chaque configuration sans modifier toute l'architecture et la globalité des configurations du commutateur 105. Le commutateur 105 est également agencé pour gérer de façon simultanée les différentes configurations.

Un tel commutateur 105 est par exemple un commutateur dit A664 (c'est-à-dire reposant sur la norme ARINC 664) dont la structure a été adaptée afin que le commutateur 105 puisse comporter les différentes configurations précitées.

De façon particulière, chaque configuration des terminaux d'utilisateurs est également décomposée en sous-configurations, le commutateur 105 étant ainsi agencé pour traiter de façon indépendante et simultanée les différentes sous-configurations au sein d'une même configuration. Chaque sous-configuration est ici associée à un type de communication particulier. Par exemple, pour une même configuration, une sous-configuration est associée aux communications Ethernet et une autre sous-configuration est associée aux communications de norme A664.

La répartition en sous-configurations est assurée en associant à chaque sous-configuration :
- la première table de configuration 106 caractérisant les échanges entre le premier module 101 et le commutateur 105,
- la deuxième table de configuration 107 caractérisant les échanges entre le deuxième module 102 et le commutateur 105,
- une table de configuration supplémentaire qui est propre à la sous-configuration considérée et qui caractérise les échanges du type de communication donné de ladite sous-configuration (Ethernet, A664 ...) entre le commutateur 105 et le terminal d'utilisateur associé.

Selon un mode de réalisation préféré, au moins un même port de sortie 109 du commutateur 105 est commun à différents terminaux d'utilisateurs.

Ceci permet de limiter le nombre de ports de sortie 109 du commutateur 105 et donc son encombrement.

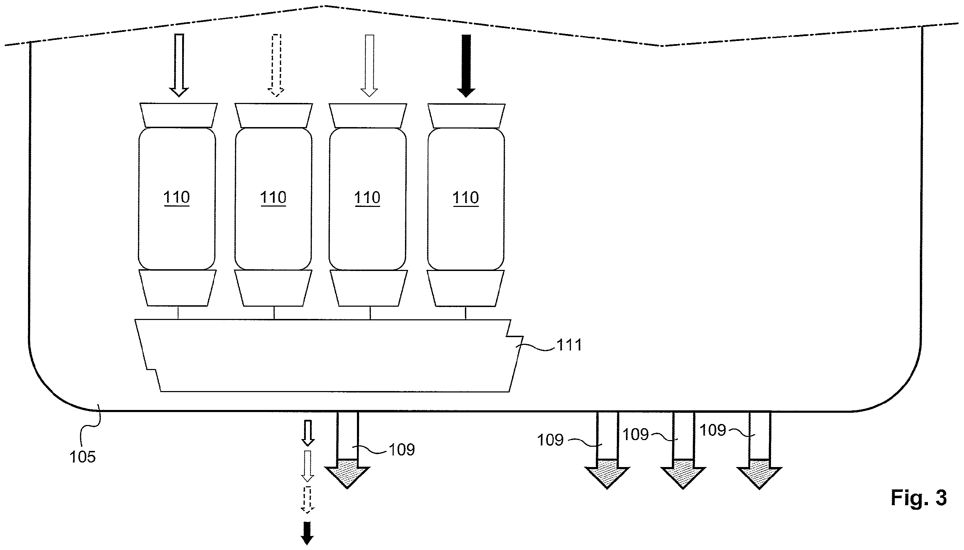

En référence à la figure 3, de façon particulière, un seul port de sortie 109 (physique) du commutateur 105 est commun à différents terminaux d'utilisateurs. Par exemple, ledit port de sortie 109 est commun pour quatre terminaux d'utilisateurs distincts.

Le commutateur 105 est agencé de sorte que ledit port de sortie 109 soit associé à autant de ports virtuels 110 internes au commutateur 105 que de terminaux d'utilisateurs reliés audit port de sortie 109, à chaque port virtuel 110 étant respectivement associé un terminal d'utilisateur.

Chaque port virtuel 110 est régi, entre autres, par une loi locale de sortie du port virtuel 110 telle qu'une loi premier entré, premier sorti (pour l'anglais First In, First Out) ou encore une loi de type Best Effort. De préférence, chaque port virtuel 110 est reconfigurable de façon indépendante via la configuration ou les sous-configurations du terminal d'utilisateur associé audit port virtuel 110.

Pour chaque terminal d'utilisateur, au moins une partie des canaux logiques du commutateur 105 associée audit terminal d'utilisateur est raccordée au port virtuel 110 dudit terminal d'utilisateur. On a donc pour chaque terminal d'utilisateur, un ensemble de canaux logiques associé au port virtuel 110 dudit terminal d'utilisateur, chaque ensemble étant spécifique à un seul terminal d'utilisateur.

Le commutateur 105 comporte en outre un organe de contrôle 111 des ports virtuels 110. L'organe de contrôle 111 est agencé pour organiser la sortie de flux de données sur le port de sortie 109 associé aux quatre ports virtuels 110 en fonction d'une loi globale de sortie sur le port de sortie 109. La loi globale de sortie est caractérisée par le budget alloué à chaque port virtuel 110 (par « budget » on entend au sens de la présente demande un débit maximal de données pouvant sortir sur le port de sortie 109) et par la latence maximale acceptable pour chaque port virtuel 110. De préférence, l'organe de contrôle est reconfigurable afin que les différents budgets alloués et les latences maximales acceptables allouées puissent être modifiés.

De la sorte, il y a une cohérence de partage du port de sortie 109 grâce à la gestion des émissions de trames à deux niveaux indépendants consécutifs : un premier niveau local, au niveau des ports virtuels 110, gérant les émissions de trames par la loi locale associée à chaque port virtuel 110 et un second niveau général, au niveau de l'organe de contrôle 111, gérant les émissions de trames en provenance des différents ports virtuels 110 et à destination du même port de sortie par la loi générale.

Chaque terminal d'utilisateur peut ainsi se comporter comme s'il était le seul à être en communication avec le commutateur.

De préférence, le commutateur 105 est agencé pour être contrôlable selon différents modes de fonctionnement : des modes de fonctionnement particuliers (à chaque mode de fonctionnement étant associé un seul utilisateur lui permettant de modifier sa configuration ou ses sous-configurations), et un mode de fonctionnement administrateur (permettant de modifier la configuration générale du commutateur 105).

Dans le cas particulier de l'utilisation d'un même port de sortie 109 par différents terminaux d'utilisateurs, les modes de fonctionnement particuliers permettent à chaque utilisateur de modifier les ressources du port virtuel 110 qui lui sont attribuées comme la loi locale de sortie dudit port virtuel 110. Le mode de fonctionnement administrateur permet à l'administrateur de gérer l'organe de contrôle 111 et ainsi de modifier la loi globale (notamment budget alloué à chaque utilisateur et latence maximale allouée à chaque utilisateur).

L'invention n'est pas limitée à ce qui vient d'être décrit, mais bien au contraire englobe toute variante entrant dans le cadre défini par les revendications.

En particulier, le réseau de communication pourra comporter un nombre différent de modules.

Pour des questions de redondance, le réseau pourra comporter un deuxième commutateur en parallèle ou plusieurs commutateurs en parallèle du premier commutateur du réseau de communication.

Par ailleurs, bien qu'ici le réseau de communication décrit soit un réseau de communication pour aéronef, le réseau de communication pourra être utilisé pour tout autre application. Par exemple le réseau de communication pourra être appliqué à d'autres véhicules qu'un aéronef et être ainsi un réseau de communication pour véhicule autonome ou bien encore pour un navire. De manière plus générale, le réseau de communication pourra être employé pour toute application nécessitant des niveaux de communication de sécurité différente.

## Revendications

1. Réseau de communication comportant au moins deux modules (101, 102) et un commutateur (105) commun raccordé d'une part aux deux modules et d'autre part à différents terminaux d'utilisateurs, le commutateur comportant autant de configurations qu'il existe de terminaux d'utilisateurs et de module raccordés au commutateur, à chaque terminal d'utilisateur et à chaque module étant associée une configuration particulière dédiée, chaque configuration associée à un terminal d'utilisateur comportant dans le commutateur :
- une première table de configuration (106) qui caractérise les échanges privés entre le premier module et le commutateur et qui est commune à toutes les configurations associées aux terminaux d'utilisateurs et également à la configuration associée au premier module,
- une deuxième table de configuration (107) qui caractérise les échanges privés entre le deuxième module et le commutateur et qui est commune à toutes les configurations associées aux terminaux d'utilisateurs et également à la configuration associée au deuxième module,
- au moins une troisième table de configuration (108) qui caractérise les échanges entre le commutateur et le terminal utilisateur associé à la configuration considérée et qui est propre à ladite configuration,
la configuration associée au premier module comprenant la première table de configuration et la configuration associée au deuxième module comprenant la deuxième table de configuration.

2. Réseau de communication selon la revendication 1, dans lequel le commutateur (105) est agencé pour que chaque configuration des terminaux d'utilisateurs soit composée de sous-configurations.

3. Réseau de communication selon la revendication 2, dans lequel le commutateur (105) est agencé pour que chaque sous-configuration d'une même configuration soit associée à un type de communication normé particulier entre le commutateur (105) et le terminal d'utilisateur associé.

4. Réseau de communication selon la revendication 3, dans lequel pour au moins une même configuration, au moins une sous-configuration est associée à la communication Ethernet et au moins une autre sous-configuration est associée à la communication A664.

5. Réseau de communication selon l'une des revendications précédentes, dans laquelle au moins un même port de sortie (109) du commutateur (105) est commun à différents terminaux d'utilisateurs.

6. Réseau de communication selon la revendication 5, dans lequel le commutateur (105) est agencé de sorte que le port de sortie (109) soit raccordé à autant de ports virtuels (110) internes au commutateur que de terminaux d'utilisateurs reliés audit port de sortie, à chaque port virtuel étant respectivement associé un terminal d'utilisateur, chaque port virtuel étant régi par une loi locale de sortie de trames de données sur ledit port virtuel, le commutateur comportant en outre un organe de contrôle (111) des ports virtuels raccordé d'une part aux différents ports virtuels et d'autre part au port de sortie et gérant les sorties desdits trames de données sur le port de sortie par une loi globale de sortie.

7. Réseau de communication selon la revendication 6, dans lequel la loi globale de sortie est définie au moins par le budget alloué à chaque port virtuel (110).

8. Réseau de communication selon la revendication 7, dans lequel la loi globale de sortie est en outre définie par une latence maximal allouée à chaque port virtuel (110) .

9. Réseau de communication selon l'une des revendications précédentes, dans lequel le commutateur (105) est agencé pour être contrôlable selon des modes de fonctionnement particuliers, à chaque mode de fonctionnement particulier étant associé un seul utilisateur, et un mode de fonctionnement administrateur.

10. Réseau de communication selon l'une des revendications précédentes, dans lequel le réseau de communication est un réseau de communication d'aéronef.

## Patentansprüche

1. Kommunikationsnetzwerk, das mindestens zwei Module (101, 102) und einen gemeinsamen Schalter (105) umfasst, der einerseits mit den beiden Modulen und andererseits mit verschiedenen Benutzer-Terminals verbunden ist, wobei der Schalter so viele Konfigurationen umfasst, wie Benutzer-Terminais und mit dem Schalter verbundene Module vorhanden sind, wobei mit jedem Benutzer-Terminal und mit jedem Modul eine besondere dedizierte Konfiguration verknüpft ist, wobei jede mit einem Benutzer-Terminal verknüpfte Konfiguration in dem Schalter umfasst:
- eine erste Konfigurationstabelle (106), die die privaten Austausche zwischen dem ersten Modul und dem Schalter kennzeichnet und die allen Konfigurationen, die mit den Benutzer-Terminals verknüpft sind, gemeinsam ist, und auch der Konfiguration, die mit dem ersten Modul verknüpft ist,
- eine zweite Konfigurationstabelle (107), die die privaten Austausche zwischen dem zweiten Modul und dem Schalter kennzeichnet und die allen Konfigurationen, die mit den Benutzer-Terminals verknüpft sind, gemeinsam ist, und auch der Konfiguration, die mit dem zweiten Modul verknüpft ist,
- mindestens eine dritte Konfigurationstabelle (108), die die Austausche zwischen dem Schalter und dem Benutzer-Terminal kennzeichnet, das mit der betreffenden Konfiguration verknüpft ist, und die der genannten Konfiguration eigen ist,
wobei die Konfiguration, die mit dem ersten Modul verknüpft ist, die erste Konfigurationstabelle umfasst und die Konfiguration, die mit dem zweiten Modul verknüpft ist, die zweite Konfigurationstabelle umfasst.

2. Kommunikationsnetzwerk nach Anspruch 1, bei dem der Schalter (105) derart ausgebildet ist, dass jede Konfiguration der Benutzer-Terminals aus Unterkonfigurationen zusammengesetzt ist.

3. Kommunikationsnetzwerk nach Anspruch 2, bei dem der Schalter (105) derart ausgebildet ist, dass jede Unterkonfiguration einer selben Konfiguration mit einem besonderen normierten Kommunikationstyp zwischen dem Schalter (105) und dem dazugehörigen Benutzer-Terminal verknüpft ist.

4. Kommunikationsnetzwerk nach Anspruch 3, bei dem für mindestens eine selbe Konfiguration mindestens eine Unterkonfiguration mit der Ethernet-Kommunikation verknüpft ist und mindestens eine weitere Unterkonfiguration mit der A664-Kommunikation verknüpft ist.

5. Kommunikationsnetzwerk nach einem der vorhergehenden Ansprüche, bei dem mindestens ein selber Ausgabeport (109) des Schalters (105) verschiedenen Benutzer-Terminals gemeinsam ist.

6. Kommunikationsnetzwerk nach Anspruch 5, bei dem der Schalter (105) derart ausgebildet ist, dass der Ausgabeport (109) an so viele virtuelle Ports (110) im Inneren des Schalters angeschlossen ist, wie Benutzer-Terminals mit dem genannten Ausgabeport verbunden sind, wobei mit jedem virtuellen Port jeweils ein Benutzer-Terminal verknüpft ist, wobei jeder virtuelle Port durch eine lokale Ausgaberegel zur Ausgabe von Datenrahmen auf dem genannten virtuellen Port geregelt wird, wobei der Schalter ferner ein Kontrollorgan (111) zur Kontrolle der virtuellen Ports umfasst, das einerseits mit den verschiedenen virtuellen Ports und andererseits mit dem Ausgabeport verbunden ist und die Ausgaben der genannten Datenrahmen auf dem Ausgabeport durch eine globale Ausgaberegel verwaltet.

7. Kommunikationsnetzwerk nach Anspruch 6, bei dem die globale Ausgaberegel mindestens von dem Budget definiert ist, das jedem virtuellen Port (110) zugeteilt ist.

8. Kommunikationsnetzwerk nach Anspruch 7, bei dem die globale Ausgaberegel ferner von einer maximalen Latenz definiert ist, die jedem virtuellen Port (110) zugeteilt ist.

9. Kommunikationsnetzwerk nach einem der vorhergehenden Ansprüche, bei dem der Schalter (105) derart ausgebildet, dass er gemäß besonderen Betriebsmodi steuerbar ist, wobei mit jedem besonderen Betriebsmodus ein einziger Benutzer verknüpft ist, sowie gemäß einem Administrator-Betriebsmodus.

10. Kommunikationsnetzwerk nach einem der vorhergehenden Ansprüche, bei dem das Kommunikationsnetzwerk ein Luftfahrzeug-Kommunikationsnetzwerk ist.

## Claims

1. A communications network comprising at least two modules (101, 102) and a common switch (105) connected firstly to the two modules and secondly to various different user terminals, the switch having as many configurations as there are user terminals and modules connected to the switch, each user terminal and each module being associated with a particular dedicated configuration, each configuration associated with a user terminal including in the switch:
- a first configuration table (106) that characterizes private exchanges between the first module and the switch and that is common to all of the configurations associated with the user terminals and also with the configuration associated with the first module;
- a second configuration table (107) that characterizes private exchanges between the second module and the switch and that is common to all of the configurations associated with the user terminals and also with the configuration associated with the second module; and
- at least one third configuration table (108) that characterizes exchanges between the switch and the user terminal associated with the configuration under consideration and that is specific to said configuration;
the configuration associated with the first module having the first configuration table and the configuration associated with the second module having the second configuration table.

2. A communications network according to claim 1, wherein the switch (105) is arranged so that each configuration of the user terminals is made up of sub-configurations.

3. A communications network according to claim 2, wherein the switch (105) is arranged so that each sub-configuration of a given configuration is associated with a particular standardized type of communication between the switch (105) and the associated user terminal.

4. A communications network according to claim 3, wherein for at least one given configuration, at least one sub-configuration is associated with Ethernet communication and at least other sub-configuration is associated with A664 communication.

5. A communications network according to any preceding claim, wherein at least one given output port (109) of the switch (105) is common to various different user terminals.

6. A communications network according to claim 5, wherein the switch (105) is arranged in such a manner that the output port (109) is connected to as many virtual ports (110) internal to the switch as there are user terminals connected to said output ports, each virtual port being associated with a respective user terminal, each virtual port being governed by a local relationship for data frame output over said virtual ports, the switch also having a control member (111) for controlling the virtual ports connected firstly to the various different virtual ports and secondly to the output port and managing the outputting of data frames over the output port by means of an overall output relationship.

7. A communications network according to claim 6, wherein the overall output relationship is defined at least by the budget allocated to each virtual port (110).

8. A communications network according to claim 7, wherein the overall output relationship is also defined by a maximum latency allocated to each virtual port (110).

9. A communications network according to any preceding claim, wherein the switch (105) is arranged to be controllable both in application of individual modes of operation, where each individual mode of operation is associated with a single user, and also in application of an administrator mode of operation.

10. A communications network according to any preceding claim, wherein the communications network is an aircraft communications network.
